# EUROPEAN PATENT SPECIFICATION

(11) **EP 4 025 406 B1**
(45) Date of publication and mention of the grant of the patent: **02.08.2023**
(21) Application number: 20767528.1
(22) Date of filing: 03.09.2020
(51) Int. Cl.: B29C 45/76

(54) **COMPUTER IMPLEMENTED METHOD OF DESIGNING A MOLDING PROCESS**
METHODE ZUM ENTWERFEN VON EINEM FORMUNGSVERFAHREN UND EIN ENTWURFSYSTEM
PROCÉDÉ DE CONCEPTION D'UN PROCÉDÉ DE MOULAGE ET UN SYSTÈME DE CONCEPTION

(30) Priority: 04.09.2019 EP 19195397
(43) Date of publication of application: 13.07.2022
(73) Proprietor: BASF SE, 67056 Ludwigshafen am Rhein (DE)
(72) Inventor: GLASER, Stefan, 67056 Ludwigshafen (DE); WOHLMUTH, Matthias, 67056 Ludwigshafen (DE); BESSER, Achim, 67056 Ludwigshafen am Rhein (DE); WONISCH, Andreas, 67056 Ludwigshafen (DE); GEIGER, Oliver, 67056 Ludwigshafen (DE); STAUDT, Dorothee Selma, 67056 Ludwigshafen (DE)
(74) Representative: BASF IP Association
(86) International application number: PCT/EP2020/074544
(87) International publication number: WO 2021/043873

(56) References cited:
- EP-A2- 1 376 415
- WO-A2-2004/079341
- US-A- 5 811 133
- US-A- 5 812 402
- US-A1- 2004 093 104
- US-A1- 2010 103 977
- US-A1- 2018 117 816
- US-A1- 2018 181 694

## Description

### Technical Field

The invention relates to a computer-implemented method of designing a molding process for manufacturing at least one component, a design system, a computer program, a computer program product and a computer-readable storage medium. Such methods, systems and devices can, in general, be employed for technical design or configuration purposes e.g. in a development phase of a molding process. However, further applications are possible.

### Background art

Molding processes, such as injection molding processes, are common manufacturing processes in recent small and large scale manufacturing industry. In typical injection molding processes plastic material, such as thermoplastic, thermosetting or elastomer material, is melted, usually in a heating process, and then injected into an empty die, e.g. under an applied pressure. The plastic material is then hardened, usually in a cooling or setting process, in order to remain in the form given by the die, thereby becoming the manufactured product. It allows reproduction of the products formed by the die in large quantities. Due to high costs for designing and configuring the die, the die cannot be easily modified if any problems occur during injection molding. Thus, in order to minimize production costs and waste, the filling process of the die or mold cavity is typically simulated before using common simulation methods.

US 2008/099569 A1 describes systems and methods for conducting thermal analysis in materials and devices having multiple thermal control zones. Modern apparatuses, such as manifolds, generally have several thermal devices that introduce or remove heat at different rates from several different regions. Previous attempts to determine a thermal profile required constant guessing and an unknown number of simulations to arrive at an acceptable result. Further, since the number of simulations required is not known from the onset of the operation, the duration is unknown, which is often unsatisfactory to manufacturing personnel. Disclosed embodiments include the use of FEA (finite element analysis) to aid in designing and/or evaluating manifold systems. In one embodiment, finite element analysis is conducted to determine the heat flux caused upon other control zone by a thermal device in a specified control zone.

Further, EP 1 376 415 A2 describes a method for modeling injection of a fluid into a mold defining a three dimensional cavity comprising: providing a three dimensional computer model defining the cavity; discretizing a solution domain based on the model; specifying boundary conditions; and solving for process variables using conservation of mass, conservation of momentum, and conservation of energy equations for at least a portion of the solution domain. The step of discretizing a solution may comprise generating a finite element mesh based on the model by subdividing the model into a plurality of connected elements defined by a plurality of nodes; and anisotropically refining the mesh such that there are more nodes in a first direction of greater variation of material properties than in a second direction of lesser variation of material properties, the refinement comprising at least one of the substeps of calculating a distance from a node to a boundary; and using a node layer numbering system.

Further, US 2018/117816 A1 describes a method of determining a number of process parameter values within an injection mould during an injection moulding process. The method comprises the steps of determining geometric data of the injection mould and/or of a form part to be manufactured, determining a virtual part-specific pressure curve of an injection moulding process, determining a part-specific event pattern on the basis of the virtual part-specific pressure curve, carrying out an injection moulding process using the injection mould and determining a measured pressure curve during the injection moulding process and determining a measurement event pattern on the basis of the measured pressure curve. Process parameter values are derived on the basis of the virtual event pattern and the measurement event pattern. The invention further describes a corresponding process parameter value determining apparatus and an injection mould arrangement.

Further, US 5 812 402 A describes an injection mold design system for correcting a profile of a product to be fabricated into a releasable profile from a mold to design an injection mold based on a corrected product shape, comprising storing means for storing information of product shape and mold profile, displaying means for displaying the product shape or the mold profile on a screen based on the information read from the storing means, inputting means for inputting designation information necessary for correction of the product shape or the mold profile, and controlling means for unloading information of lines or planes being obstructive to correction of the product shape and the mold profile into the storing means in response to the designation information input by the inputting means, removing the lines or the planes from the screen, and replotting the line or the planes on the screen in terms of the information of lines or planes unloaded into the storing means after the correction operation of the product shape or the mold profile is completed.

Further, US 2004/093104 A1 describes a design support apparatus comprising: a flow analysis means for analyzing a flow of thermosetting resin injected into a resin filling cavity to mold a resin mold product made of the thermosetting resin, using a finite difference method or a finite element method; a residual strain calculation means for calculating residual strain (or stress) of the thermosetting resin after heat shrinkage of the thermosetting resin injected into the resin filling cavity to mold said resin mold product; and a strength analysis means for analyzing strength of said resin mold product, using a finite element method. According to this arrangement, strength of the resin mold product made of the thermosetting resin can be predicted accurately.

Further, US 2018/181694 A1 describes a method of optimizing a process optimization system for a moulding machine including setting a setting data by a user on the actual moulding machine, obtaining first values for at least one descriptive variable of the moulding process based on the setting data set and/or on the basis of the cyclically carried out moulding process, and obtaining second values for the at least one descriptive variable based on data from the process optimization system. According to a predetermined differentiating criterion, it is checked whether the first values and the second values differ from each other. If the checking shows that the first values and the second values differ from each other, the process optimization system is modified such that, when applied to the moulding machine and/or the moulding process, the first values for the descriptive variable substantially result instead of the second values for the descriptive variable.

US 5 811 133 A describes a simulation system predicting a behavior of a molten resin in a mold in filling, packing, and cooling process by using a fundamental equation formulated by the finite element method, and shrinkage factors in a direction of thickness and planar directions based on anisotropy of a volume shrinkage factor obtained during prediction of the filling, packing, and cooling processes, so that a warp deformation in an injection-molded article can be predicted at a higher precision.

US 2010/103977 A1 describes a method of analyzing thermal stress including calculating a distribution of the number of fillers in a composite integrally molded product by using physical property values of resin material containing fillers, and determining a coefficient of linear expansion of the resin material in the composite integrally molded product, that is used as an input condition of a thermal stress analysis, based on the distribution of the number of the fillers.

WO 2004/079341 A2 describes an apparatus and methods for predicting properties of processed material by simulating the processing history of the material, by using a two-phase constitutive description of the material to characterize the morphology of the material as it is being processed, and by using this morphological characterization to predict values of properties of the material at any stage of processing. The property values may be used in a structural analysis of the processed part, in the design of the part, and/or in the design of the process for manufacturing the part.

In designing a molding process for manufacturing components, several technical challenges exist. Typically, in every phase of the developing process, input from technical experts, such as in the field of mechanical engineering, chemical engineering, process engineering, chemistry, material sciences or physics, is required, e.g. for constructing and interpreting models, simulations and calculations. Further, such methods and systems require the performance of complex calculations and intensive computing. The methods and systems typically require large data storage and computing capacities as well as technical expertise which often are not available. Thus, generally, the performing of such methods is very time-consuming and complex.

### Problem to be solved

It is therefore desirable to provide means and methods which address the above mentioned technical challenges of designing a molding process for manufacturing at least one component. Specifically, methods, systems, computer programs and products shall be proposed for improving the process of designing a molding process for manufacturing at least one component, compared to methods, systems and devices known in the art.

### Summary

This problem is addressed by the methods, systems, computer programs and products of the independent claims. Advantageous embodiments which might be realized in an isolated fashion or in any arbitrary combinations are listed in the dependent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the invention a computer-implemented method of designing a molding process for manufacturing at least one component is disclosed. The computer-implemented method may also be referred to as method, design method or designing method. The computer-implemented method comprises the following steps, which may be performed in the given order. However, a different order may also be possible. Further, one or more than one or even all of the steps may be performed once or repeatedly. Further, the method steps may be performed in a timely overlapping fashion or even in parallel. The method may further comprise additional method steps which are not listed.

The computer-implemented method comprises the following steps:
a) retrieving three-dimensional geometrical data describing a candidate shape of a mold cavity;
b) analyzing the geometrical data, the analyzing comprising:
   b1. analyzing a geometry of the mold cavity by automatically scanning the geometrical data for a plurality of predetermined criteria; and
   b2. simulating a use of the mold cavity by at least one of:
      - a computer-implemented simulation of a filling of the mold cavity with a molten mass of at least one material;
      - a computer-implemented simulation of the component manufactured by using the mold cavity;
c) automatically interpreting at least one analysis result generated in step b) by subjecting the analysis result to at least one target specification; and
d) outputting at least one interpretation result generated in step c), the interpretation result describing at least one quality of one or both of the molding process and a part design using the candidate shape of the mold cavity.

The computer-implemented method of designing a molding process for manufacturing at least one component may fully or partially be performed on a network, such as on one or more computing devices of the network, for example on a web-platform. In particular, as an example, at least step a), step b) and step c) of the designing method may be performed on the network. As an example, the designing method may be configured to fully be performed online, such as on the network.

The term "computer-implemented" as used herein is a broad term and is to be given its ordinary and customary meaning to a person of ordinary skill in the art and is not to be limited to a special or customized meaning. The term specifically may refer, without limitation, to a process which is fully or partially implemented by using a data processing means, such as data processing means comprising at least one processor. The term "computer", thus, may generally refer to a device or to a combination or network of devices having at least one data processing means such as at least one processor. The computer, additionally, may comprise one or more further components, such as at least one of a data storage device, an electronic interface or a human-machine interface.

The term "processor" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processor may be configured for processing basic instructions that drive the computer or system. As an example, the processor may comprise at least one arithmetic logic unit (ALU), at least one floating-point unit (FPU), such as a math coprocessor or a numeric coprocessor, a plurality of registers, specifically registers configured for supplying operands to the ALU and storing results of operations, and a memory, such as an L1 and L2 cache memory. In particular, the processor may be a multicore processor. Specifically, the processor may be or may comprise a central processing unit (CPU). Additionally or alternatively, the processor may be or may comprise a microprocessor, thus specifically the processor's elements may be contained in one single integrated circuitry (IC) chip. Additionally or alternatively, the processor may be or may comprise one or more applicationspecific integrated circuits (ASICs) and/or one or more field-programmable gate arrays (FPGAs) or the like.

The term "designing" as used herein is a broad term and is to be given its ordinary and customary meaning to a person of ordinary skill in the art and is not to be limited to a special or customized meaning. The term specifically may refer, without limitation, to a procedure of planning and/or specifying an object or process. The procedure of designing, as an example, may comprise developing or defining the molding process.

The term "molding process" as used herein is a broad term and is to be given its ordinary and customary meaning to a person of ordinary skill in the art and is not to be limited to a special or customized meaning. The term specifically may refer, without limitation, to a process or procedure of shaping at least one material into an arbitrary form or shape. As an example, the molding process may comprise injection molding. In particular, the form or shape may be transferred onto the at least one material by a mold.

The term "mold" as used herein is a broad term and is to be given its ordinary and customary meaning to a person of ordinary skill in the art and is not to be limited to a special or customized meaning. The term specifically may refer, without limitation, to a die or form, e.g. a form giving matrix or frame. In particular, as used herein, the mold may refer to an arbitrary die and/or form comprising at least one cavity, such as at least one form giving structure and/or cut-out. The mold may specifically be used in the molding process, such as injection molding, wherein at least one molten mass of material may be injected into the at least one cavity of the mold. For sake of simplicity, herein, the terms "mold" and "mold cavity" may be used interchangeably. As an example, the mold having the at least one cavity may be used in the molding process for forming the material. In particular, the molten mass of material injected into the cavity of the mold may be given a negative form and/or geometry of the cavity. Specifically, the mold may be used for manufacturing at least one component, wherein the manufactured component may have a negative form and/or shape of the mold cavity. For sake of simplicity, herein, the terms "mold" and "mold cavity" may be used interchangeably.

The molding process may be configured for manufacturing at least one component. The term "component" as used herein is a broad term and is to be given its ordinary and customary meaning to a person of ordinary skill in the art and is not to be limited to a special or customized meaning. The term specifically may refer, without limitation, to an arbitrary part or element. In particular, the component may be or may comprise a constituent member of an arbitrary machine or apparatus. The component may, for example, at least partially have a negative shape of the mold or of a cavity of the mold used in the molding process for manufacturing the component. Thus, the "molding process for manufacturing at least one component" may be or may refer to a form-giving procedure for creating the component.

The term "retrieving" as used herein is a broad term and is to be given its ordinary and customary meaning to a person of ordinary skill in the art and is not to be limited to a special or customized meaning. The term specifically may refer, without limitation, to the process of a system, specifically a computer system, generating data and/or obtaining data from an arbitrary data source, such as from a data storage, from a network or from a further computer or computer system. The retrieving specifically may take place via at least one computer interface, such as via a port such as a serial or parallel port. The retrieving may comprise several sub-steps, such as the sub-step of obtaining one or more items of primary information and generating secondary information by making use of the primary information, such as by applying one or more algorithms to the primary information, e.g. by using a processor.

The term "geometrical data" as used herein is a broad term and is to be given its ordinary and customary meaning to a person of ordinary skill in the art and is not to be limited to a special or customized meaning. The term specifically may refer, without limitation, to information on a three-dimensional form or shape of an arbitrary object or element. Specifically, the geometrical data, such as the information on a three-dimensional shape, may be present in a computer-readable form, such as in a computer compatible data set, specifically a digital data set. As an example, the geometrical data may be or may comprise computer-aided-design-data (CAD data). Specifically, three-dimensional geometrical data may be or may comprise CAD data describing the form or shape of the object or element. Thus, the "geometrical data describing a candidate shape of a mold cavity" may particularly be information on a possible form and/or shape of at least one object or element formed by using the mold and/or on a possible form and/or shape of the mold cavity. Thus, in particular, the geometrical data retrieved in step a) may specifically be or may comprise information on a negative form and/or shape of the mold, for example of the mold used in the molding process.

The term "candidate shape" as used herein is a broad term and is to be given its ordinary and customary meaning to a person of ordinary skill in the art and is not to be limited to a special or customized meaning. The term specifically may refer, without limitation, to an arbitrary starting form or shape. In particular, the candidate shape may be or may comprise a starting geometry of the mold, specifically of the mold used in the molding process. Thus, the candidate shape may for example be a starting geometry of the mold used in the method of designing a molding process. In particular, the candidate shape may be or may comprise an initial geometry and/or form of the mold cavity. For example, the candidate shape may be or may comprise a geometry and/or form of a mold to be used in the molding process for manufacturing the at least one component.

The term "scanning" as used herein is a broad term and is to be given its ordinary and customary meaning to a person of ordinary skill in the art and is not to be limited to a special or customized meaning. The term specifically may refer, without limitation, to an arbitrary process or procedure of examining an arbitrary object or data. Thus, scanning the geometrical data may be or may comprise a process or procedure of examining or evaluating the geometrical data. The scanning may specifically be performed automatically. The scanning may be performed autonomously by a computer or computer network. Thus, the term "automatically" specifically may refer to a computer or computer network performing a process. Consequently, the term "automatically scanning" may, for example, be or may comprise a computer performing the process or procedure of scanning, such as autonomously. For example, the procedure of automatically scanning may be performed without external interference, such as without interference or input from a technical expert or user.

The geometrical data may specifically be scanned for a plurality of predetermined criteria. The term "criterion" as used herein is a broad term and is to be given its ordinary and customary meaning to a person of ordinary skill in the art and is not to be limited to a special or customized meaning. The term specifically may refer, without limitation, to a characteristic or specification by which an arbitrary object or element is judged or evaluated. In particular, the criterion may be or may comprise at least one reference characteristic or property with which a characteristic of the object or element is compared. Specifically, the criterion may be a characteristic or specification for a manufacturing of a component. Thus, as an example, the criterion may be or may comprise at least one characteristic, such as a reference characteristic, for which the geometrical data, such as the geometrical data describing the candidate shape of the mold, is scanned. The criterion may, for example, be used for determining a manufacturability of a component when using a mold cavity having a form or shape as defined by the geometrical data.

The computer-implemented simulation of the component manufactured by using the mold and/or mold cavity may specifically refer to a computer-implemented simulation of at least one property or characteristic of the component, such as a behavior of the component under the influence of an external force of tension exerted on the component, for example a mechanical strength and/or stress analysis. In particular, a material behavior under load, stress or strain may be simulated.

The material, specifically the material used in the molding process, e.g. for manufacturing the component, may for example be or may comprise a plastic material. The term "plastic material" as used herein is a broad term and is to be given its ordinary and customary meaning to a person of ordinary skill in the art and is not to be limited to a special or customized meaning. The term specifically may refer, without limitation, to an arbitrary thermoplastic, thermosetting or elastomer material. In particular, the plastic material may be a mixture of substances comprising monomers and/or polymers. Specifically, the plastic material may be or may comprise a thermoplastic material. Additionally or alternatively, the plastic material may be or may comprise a thermosetting material. Additionally or alternatively, the plastic material may comprise an elastomer material.

The computer-implemented simulation of a filling of the mold cavity with a molten mass of at least one material may specifically refer to a computer-implemented simulation of a manufacturing of the component. Thus, the material may specifically be in a molten state during the manufacturing of the component. Alternatively, in the computer-implemented simulation of the component manufactured by using the mold, the simulated material may be in a hardened or cured state.

The analyzing of the geometrical data in step b) may lead to at least one analysis result, such as to an output of at least one of the computer-implemented simulations.

In step c), the at least one analysis result generated in step b) may be automatically interpreted, such as by using a computer or computer network. As an example, in step c) at least one interpretation result may be automatically discerned from the analysis result. In particular, the at least one interpretation result may be generated by subjecting the analysis result to at least one target specification.

The term "target specification" as used herein is a broad term and is to be given its ordinary and customary meaning to a person of ordinary skill in the art and is not to be limited to a special or customized meaning. The term specifically may refer, without limitation, to a characteristic or property which is aimed for to exist in an arbitrary object or element. The target specification may for example be or may comprise at least one property or characteristic, wherein it is aimed for the component to have and/or show this property or characteristic.

The term "interpretation result" as used herein is a broad term and is to be given its ordinary and customary meaning to a person of ordinary skill in the art and is not to be limited to a special or customized meaning. The term specifically may refer, without limitation, to an arbitrary outcome or conclusion obtained from calculation and/or investigation. In particular, the interpretation result may refer to an outcome or conclusion of an interpretation, such as of the automatic interpretation in step c). The interpretation result specifically may be or may comprise information in a computer-readable format, such as digital information.

The term "outputting" as used herein is a broad term and is to be given its ordinary and customary meaning to a person of ordinary skill in the art and is not to be limited to a special or customized meaning. The term specifically may refer, without limitation, to the process of making information available to another system, data storage, person or entity. As an example, the output may take place via one or more interfaces, such as a computer interface or a human-machine interface. The output, as an example, may take place in one or more of a computer-readable format, a visible format or an audible format.

The method may further comprise:
e) retrieving at least one material to be used for the molding process.

In particular, the material, specifically the plastic material, to be used for the molding process, e.g. for manufacturing the component, may be retrieved in step e). Step e) may, for example, be performed before step b).

Step e) may specifically comprise at least the following two substeps:
e1. retrieving at least one target property of at least one of: the material; the component; a manufacturing machine for manufacturing the component; and
e2. automatically selecting at least one material from a database according to the target property.

Step e), specifically step e2., may for example comprise using at least one process of artificial intelligence. Specifically, step e2. may comprise using at least one neural network. Thus, the material to be used for the molding process may specifically be retrieved by using artificial intelligence, such as a neural network or the like. As an example, a neural network may be trained by using training data comprising target properties and materials suitable for these target properties. The training data, for example, may be assembled by a technical expert and/or may be data of previous experience.

In particular, step b1. may comprise determining in the geometrical data at least one of: undercuts with respect to an intended demolding of the component from the mold; draft angles with respect to an intended demolding of the component from the mold; thin areas; mass accumulations; wall thickness distributions; base wall thickness, rib thickness to base wall thickness ratio; manufacturability of the mold with respect to an intended demolding of the component from the mold, e.g. from the mold cavity.

Specifically, step b1. may comprise determining in the geometrical data at least one measured variable. Further, step c) may, for example, comprise comparing the at least one measured variable with at least one threshold value of the target specification.

As an example, the at least one measured variable may be selected from the group consisting of: a length, specifically a maximum flow length of the molten mass of the at least one material; an angle, specifically an angle between a surface of the mold and a direction of intended demolding; a thickness, specifically an extension in at least one direction perpendicular to a flow direction of the molten mass of the at least one material.

Further, step c) may specifically comprise identifying critical geometrical properties of the candidate shape of the mold. Thus, in step c) critical geometrical properties of the candidate shape, such as, for example, adverse undercuts, mass accumulations and the like may be identified.

Specifically, step c) may comprise using at least one process of artificial intelligence, specifically at least one neural network. Thus, the at least one analysis result generated in step b) may, for example, be automatically interpreted by using artificial intelligence, e.g. a neural network or the like.

Step b2. may specifically comprise determining at least one of: weld lines; flow lengths; thin areas; mass accumulations; shear stress; shrinkage; filling pressure; clamp force needed to close the mold; cycle time; filling time; load limits, specifically load limits leading to an elastic deformation of the component, in particular load limits leading to a plastic deformation of the component.

In particular, step b2. may comprise determining at least one simulated variable. Further, step c) may comprise comparing the at least one simulated variable with at least one simulation threshold variable of the target specification. Specifically, the at least one simulated variable may be a property selected from the group consisting of: a property of the molten mass of the at least one material used for filling the mold, specifically a viscosity of the molten mass of the at least one material, a temperature of the molten mass of the at least one material; a property of the mold, specifically a temperature of the mold and a pressure within the mold; a flow path length; a filling time for completely filling the mold with the molten mass of the at least one material; a property of the at least one material of the component, specifically a hardness, a robustness, more specifically a structural robustness, an elasticity and a plasticity.

Further, the method comprises
f) pre-processing the geometrical data retrieved in step a) by discretizing the geometrical data into a mesh comprising a finite number of mesh elements.

Step f) is performed before performing step b). Step f) further comprises a file repair of defective parts of the geometrical data. Thus, defective parts of the geometrical data, such as holes in the surface, overlapping or unconnected areas, incomplete volumes or the like, may be repaired in step f).

In particular, the three-dimensional geometrical data may be a CAD data. Specifically, the three-dimensional geometrical data may be a CAD data geometrically describing the candidate shape of the mold.

The at least one interpretation result generated in step c) may specifically comprise at least one item of recommendation information. The term "item of recommendation information" as used herein is a broad term and is to be given its ordinary and customary meaning to a person of ordinary skill in the art and is not to be limited to a special or customized meaning. The term specifically may refer, without limitation, to an arbitrary piece of data comprising a suggestion or proposition. In particular, the item of information may be or may comprise data or information on a suggestion or proposition regarding the candidate shape. Thus, specifically, the item of recommendation information may be or may comprise at least one suggestion or recommendation on one or more characteristics of the molding process for manufacturing the at least one component. In particular, the at least one item of recommendation information may comprise at least one recommendation selected from the group consisting of: a material adaption, a geometry adaption, and adaption of manufacturing parameters.

The method may further comprise outputting at least one automatic report. Specifically, the method may further comprise outputting at least one automatic report comprising the at least one item of recommendation information.

In particular, step d) may comprise outputting the at least one item of recommendation information in the at least one automatic report. Specifically, step d) may comprise making the at least one item of recommendation information available to another system, data storage, person or entity, e.g. via at least one interface. As an example, the outputting of step d) may be or may comprise making the interpretation result, such as the automatic report comprising the at least one item of recommendation information, available to a user.

In particular, the outputting of the at least one automatic report, e.g. in step d), may comprise providing guidance for one or more of: a material adaption, a geometry adaption and an adaption of manufacturing parameters. Specifically, the outputting of the interpretation result, such as the recommendation information in the automatic report, may be configured for providing guidance, such as a learning tool, e.g. to a user. Thus, as an example, at least one possible approach and/or solution may be provided in case of a problem which may, specifically in view of the analysis result generated in step b), occur when using the mold cavity for manufacturing the at least one component, e.g. possible difficulties which may negatively influence the manufacturability of the at least one component.

As an example, in step d) the at least one item of recommendation information may be provided specifically for the purpose of enabling the user to recognize and/or solve possible faults and/or difficulties of the mold cavity, such as one or more of material related difficulties, geometry related difficulties and manufacturing parameter related difficulties.

Further, the method may comprise:
g) retrieving at least one item of analysis information from the at least one interpretation result generated in step c) and using the at least one item of analysis information in an automated learning process.

Specifically, the at least one item of analysis information may comprise information on at least one of: a reaction to the at least one interpretation result and a material selected to be used for the molding process.

Further, the method may comprise using at least one requesting computer and at least one processing computer. In particular, the processing computer may retrieve the three-dimensional geometrical data from the requesting computer. Further, the processing computer may perform at least steps b)-c) of the method and may output the interpretation result in step d) to the requesting computer.

Specifically, the requesting computer and the processing computer may communicate via at least one web interface. The term "web interface" as used herein is a broad term and is to be given its ordinary and customary meaning to a person of ordinary skill in the art and is not to be limited to a special or customized meaning. The term specifically may refer, without limitation, to an arbitrary item or element forming a boundary configured for transferring information, which may be addressed via Hypertext Transfer Protocol (HTTP). Additionally or alternatively, the web interface may be configured for transferring information from the requesting computer onto the processing computer and/or vice versa, such as to send, receive and/or interchange information. The web interface may specifically provide means for transferring or exchanging information. In particular, the web interface may provide an online data transfer connection. The web interface may comprise at least one web-platform. The web-platform may be configured for receiving requests, e.g. at least one request from the requesting computer.

As an example, a user may initiate from the requesting computer a transmittal of the three-dimensional geometrical data to the processing computer. In particular, the three-dimensional geometrical data, such as three-dimensional geometrical data of the candidate shape of the mold cavity and/or of a shape of the component to be manufactured by using the mold, may be transferred from the requesting computer to the processing computer, for example, via the at least one web interface, for example via the at least one web-platform.

The method may further comprise:
h) outputting the interpretation result generated in step c) to at least one further computing device.

In particular, the computing device may be configured for translating the interpretation result into at least one process parameter, wherein the process parameter may, for example, be a parameter of a manufacturing process.

The computing device may, for example, be a computing device of a collaborator or partner. Specifically, the computing device may be a computing device of a partner selected from the group consisting of: a tool manufacturer; a mold designer, a mechanical engineer, an injection molder, a material supplier.

Step h) may further comprise identifying matching collaborators or partners. Specifically, matching collaborators or partners may be identified by comparing the interpretation result, particularly the interpretation result generated in step c), with an arbitrary database or listing comprising a plurality of solvers for possible problems resulting or concluding from the interpretation result. Specifically, the database may be or may comprise information on a plurality of collaborators or partners, such as the identity and expertise of numerous companies and/or businesses.

In a further aspect of the invention, a design system for designing a molding process for manufacturing at last one component is disclosed. The design system comprises at least one processor configured to perform the steps of the computer implemented method for designing a molding process for manufacturing at least one component, e.g. the designing method, as described above or as described in further detail below. Thus, for possible definitions of most of the terms used herein, reference may be made to the description of the designing method as disclosed in the first aspect of the present invention.

In particular, the design system may comprise at least one processing computer and at least one requesting computer, wherein the processing computer may specifically be configured for retrieving the three-dimensional geometrical data from the requesting computer, for performing at least steps b)-c) of the designing method, and for outputting the interpretation result in step d) of the designing method to the requesting computer.

The design system, specifically the processing computer, may comprise at least one or both of a data storage or memory for storing a database, specifically a material database or a partner database. In particular, the data storage or memory may be selected from the group consisting of: an internal data storage, e.g. an internal drive or memory; an external data storage, e.g. an external drive, and external data server, such as a cloud server; a portable data storage.

The design system may further comprise at least one web interface for one or both of transmitting information from the requesting computer to the processing computer or vice versa. The web interface may comprise one or both of a wireless web interface and a wire-bound web interface, such as for communication with a computer network such as the world-wide web.

The design system may specifically be or may comprise a client-server-system. In particular, the client-server-system may be configured for partitioning tasks and/or workloads between at least one server, specifically a provider of at least one resource or service, and at least one client or client computer requesting the at least one service, such as at least one service requester. In particular, herein, the at least one server may be the processing computer. Specifically, the at least one processing computer may be selected from the group consisting of: a server; a web-server, e.g. configured for providing a web-platform. The requesting computer may be the client and/or client computer. Specifically, the requesting computer may be at least one personal computer or computing device of a user.

In detail, the design system may comprise processing computers, such as a plurality of servers, wherein the servers may partially be or may comprise a web-server. Thus, as an example, the design systems may comprise a plurality of servers at least partially operating in a cloud or network. The design system may specifically be or may comprise a complex system of one or more processing computers, one or more requesting computers. Thus, the design system may be or may comprise complex interactions between one or more processing computers, such as at least one back-end server, one or more requesting computers, such as at least one front-end server or computer, specifically a web-front-end, and one or more computer-implemented simulations.

In a further aspect of the invention a computer program is disclosed. The computer program comprising instructions which, when the program is executed by a computer or computer system, cause the computer or computer system to carry out the computer implemented method for designing a molding process for manufacturing at least one component, e.g. the designing method, as described above or as described in further detail below. Thus, for possible definitions of most of the terms used herein, reference may be made to the description of the designing method as disclosed in the first aspect of the present invention.

Specifically, the computer program may be stored on a computer-readable data carrier and/or on a computer-readable storage medium. As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Further disclosed and proposed herein is a computer program product comprising instructions which, when the program is executed by a computer or computer system, cause the computer or computer system to carry out the computer implemented method for designing a molding process for manufacturing at least one component, e.g. the designing method, as described above or as described in further detail below. Thus, for possible definitions of most of the terms used herein, again reference may be made to the description of the designing method as disclosed in the first aspect of the present invention.

In particular, the computer program product may comprise program code means stored on a computer-readable data carrier, in order to perform the designing method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier. Specifically, the computer program product may be distributed over a data network.

Further disclosed and proposed herein is a computer-readable storage medium comprising instructions which, when executed by a computer or computer system, cause the computer or computer system to carry out the computer implemented method for designing a molding process for manufacturing at least one component, e.g. the designing method, as described above or as described in further detail below. Thus, for possible definitions of most of the terms used herein, again reference may be made to the description of the designing method as disclosed in the first aspect of the present invention.

The methods, systems and programs of the present invention have numerous advantages over methods, systems and programs known in the art. In particular, the methods, systems and programs as disclosed herein may improve the performance of designing a molding process, compared to devices, methods and systems known in the art. Specifically, a processing or designing time, may be significantly reduced by the present invention. Further, the present invention may require less computation capacity and may show and/or have a reduced complexity compared to state-of-the-art designing methods, specifically due to avoiding inefficiencies in a normal workflow for designing and making plastic parts.
- Figure 1:: shows a part of an embodiment of a three-dimensional geometrical data describing a candidate shape of a mold cavity and a component manufactured by using the mold cavity;
- Figure 2:: shows an embodiment of a design system in a perspective view; and
- Figures 3 to 9:: show flow charts of different embodiments of a computer-implemented method of designing a molding process for manufacturing at least one component.

### Detailed description of the embodiments

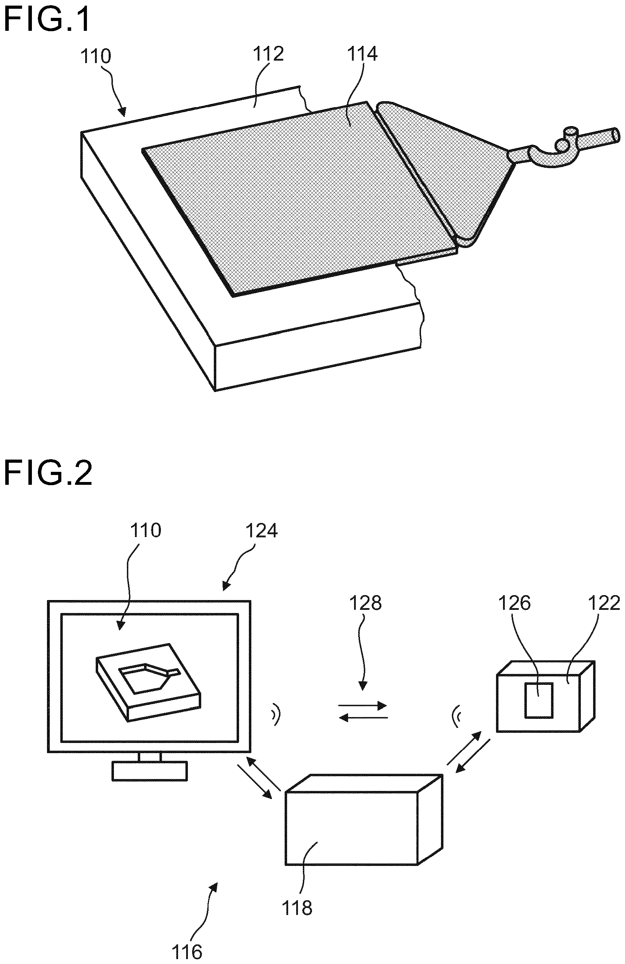

In Figure 1 an embodiment of a three-dimensional geometrical data 110 describing a candidate shape of a mold cavity 112 is partially illustrated in a perspective view. Further, a component 114 manufactured by using the mold cavity 112 is shown in Figure 1.

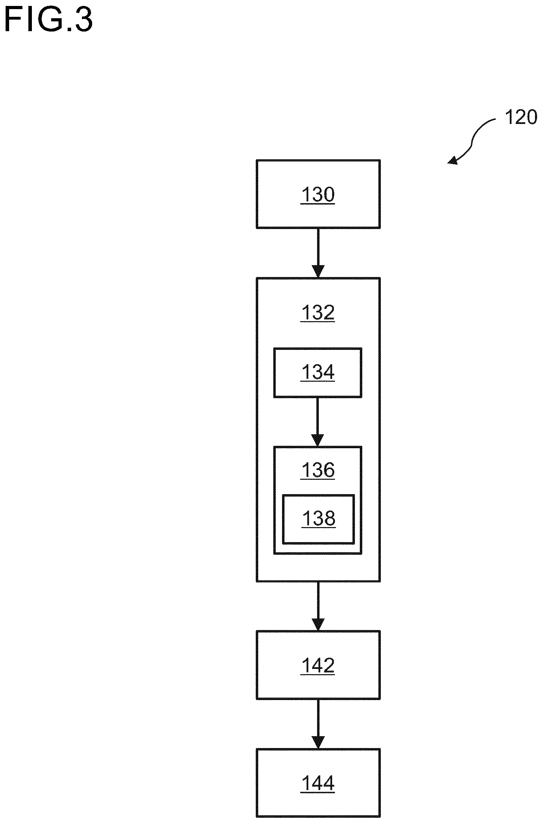

An embodiment of a design system 116 for designing a molding process for manufacturing at least one component 114 is illustrated in a perspective view in Figure 2. The design system 116 comprises at least one processor 118 configured to perform a computer implemented method 120 of designing a molding process for manufacturing at least one component 114 as for example illustrated in Figures 3 to 9. The design system 116 may further comprise at least one processing computer 122 and at least one requesting computer 124. Specifically, the processing computer 122 may be configured for retrieving the three-dimensional geometrical data 110 from the requesting computer 124. Further, the processing computer 122 may be configured for outputting and interpretation result generated in the computer implemented method 122 the requesting computer 124. In particular, the processing computer 122 may comprise a memory 126 for storing a database, such as a material database or a partner database. As an example, the design system 116 may comprise at least one web interface 128 four one or both of transmitting information from the requesting computer 124 to the processing computer 122 and vice versa.

In particular, the requesting computer 124 of the design system 116 may for example be or may comprise at least one front-end or front-end computer, such as at least one client computer. As an example, the requesting computer 124 may be configured for illustrating the interpretation result of step d) of the designing method to a user.

The processing computer 122 of the design system 116 may for example be or may comprise at least one back-end or back-end computer, such as at least one server, for example at least one of at least one web-server, e.g. configured for providing a web-platform. In particular, the processing computer 122 may be configured for processing the three-dimensional geometrical data 110. In detail, in order to process the three-dimensional geometrical data 110, the processing computer 122 may make use of at least one application programming interface (API) for performing steps b) - c) of the designing method.

In Figures 3 to 9 flow charts of different embodiments of the computer implemented method 120 of designing a molding process for manufacturing at least one component 114 are illustrated. The computer implemented method 120 of designing a molding process for manufacturing at least one component 114, specifically the designing method 120, comprises the following steps, which may specifically be performed in the given order. Still, a different order may also be possible. It may be possible to perform two or more of the method steps fully or partially simultaneously. It may further be possible to perform one, more than one or even all of the method steps once or repeatedly. The method may comprise additional method steps which are not listed herein. Method steps of the designing method 120 are the following:

| | | |
|---|---|---|
| step a) | (denoted with reference number 130) retrieving three-dimensional geometrical data 110 describing a candidate shape of a mold cavity 112; | |
| step b) | (denoted with reference number 132) analyzing the geometrical data 110, the analyzing comprising: | |
| | step b1. | (denoted with reference number 134) analyzing a geometry of the mold cavity 112 by automatically scanning the geometrical data 110 for a plurality of predetermined criteria; and |
| | step b2. | (denoted with reference number 136) simulating a use of the mold cavity 112 by at least one of: |
| | | - a computer-implemented simulation of a filling of the mold cavity 112 with a molten mass of at least one material (denoted with reference number 138); and |
| | | - a computer-implemented simulation of the component 114 manufactured by using the mold cavity 112 (denoted with reference number 140); |
| step c) | (denoted with reference number 142) automatically interpreting at least one analysis result generated in step b) by subjecting the analysis result to at least one target specification; and | |
| step d) | (denoted with reference number 144) outputting at least one interpretation result generated in step c), the interpretation result describing at least one quality of one or both of the molding process and a part design using the candidate shape of the mold cavity 112. | |

As an example, the geometry of the mold cavity 112 analyzed in step b1. 134 may be or may comprise at least one geometrical data of a part, such as of a plastic part, e.g. at least one geometry of the component 114, wherein the geometry of the mold cavity 112 may specifically be or may comprise a negative geometry, such as an inverse geometrical shape, of the component 114.

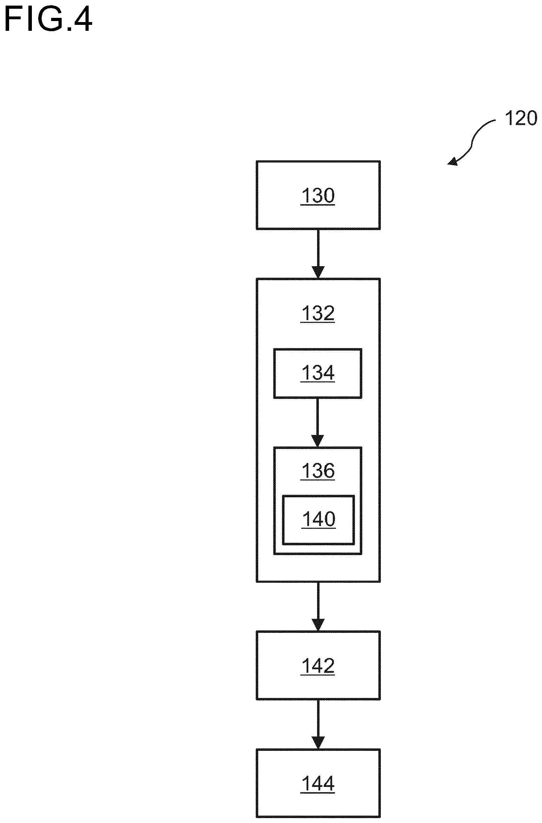

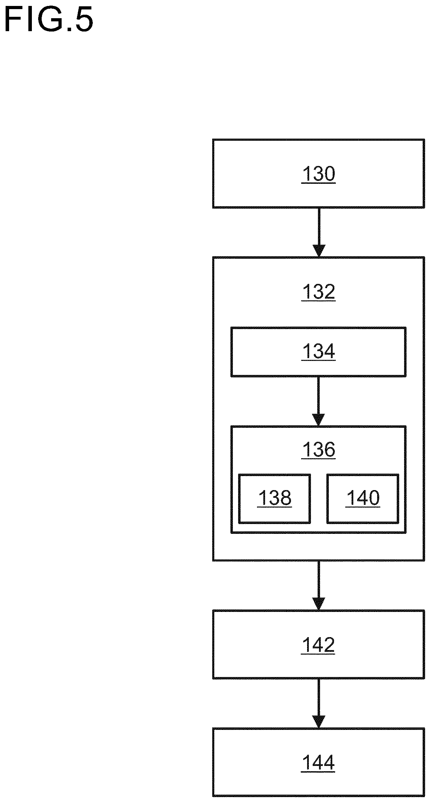

In particular, as illustrated in Figure 3, step b2. 136 of the designing method 120 may comprise only the first substep of b2. 138 of simulating the use of the mold cavity 112 by a computer implemented simulation of a filling of the mold cavity 112 with a molten mass of at least one material. Alternatively, as illustrated in Figure 4, step b2. 136 of the designing method 120 may comprise only the second substep of b2. 140 of simulating the use of the mold cavity 112 by a computer implemented simulation of the component 114 manufactured by using the mold cavity 112. Alternatively, as illustrated in Figure 5, step b2. 136 of the designing method 120 may comprise both the first substep 138 and the second substep 140.

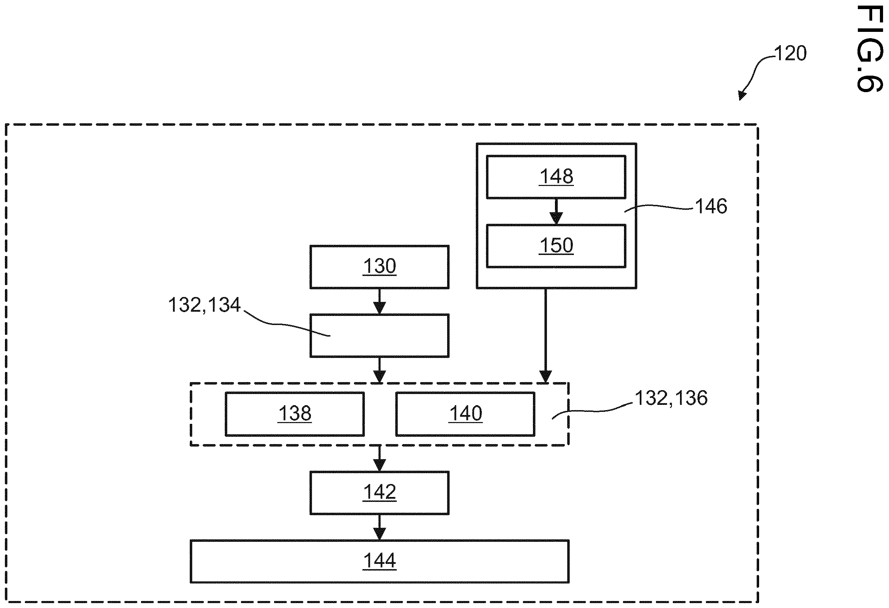

The designing method 120 may further comprise step e) (denoted with reference number 146) of retrieving at least one material to be used for the molding process, wherein step e) 146 may be performed before step b) 132, as for example illustrated in Figures 6 to 9. In particular, step e) may comprise:
e1. (denoted with reference number 148) retrieving at least one target property of at least one of: the material; the component 114; a manufacturing machine for manufacturing the component 114; and
e2. (denoted with reference number 150) automatically selecting at least one material from a database according to the target property.

Specifically, step e2. 150 may comprise using at least one process of artificial intelligence, in particular the at least one neuron network.

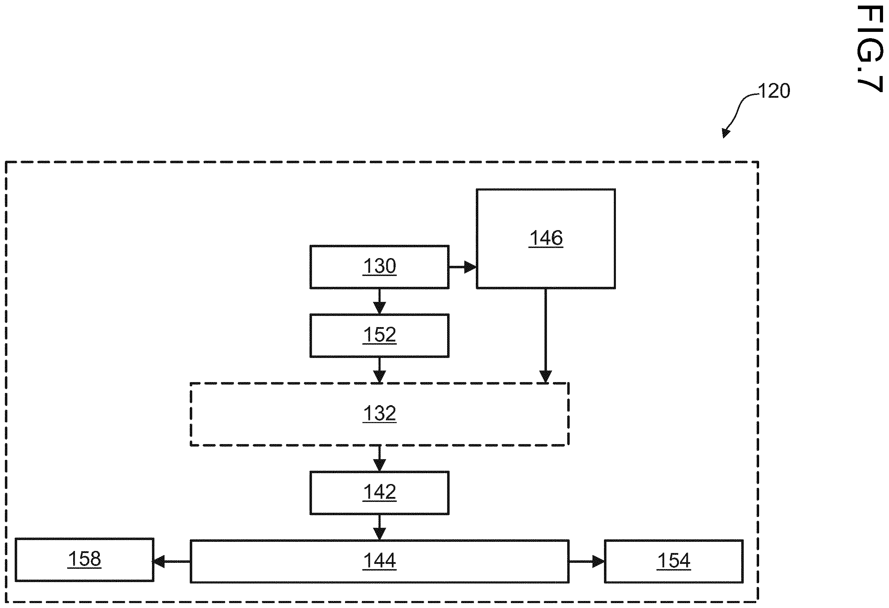

Further, the designing method 120 comprises step f) (denoted with reference number 152) of pre-processing the geometrical data 110 retrieved in step a) 130 by discretizing the geometrical data 110 into a mesh comprising a finite number of mesh elements. Step f) further comprises a file repair of defective parts of the geometrical data 110. As illustrated in Figure 7, step f) is performed before performing step b).

Specifically, the designing method 120 may further comprise, for example as a further step as illustrated in Figures 7 to 9, outputting at least one automatic report 154. In particular, the automatic report may comprise at least one item of recommendation information, for example comprised by the interpretation result generated in step c) 142.

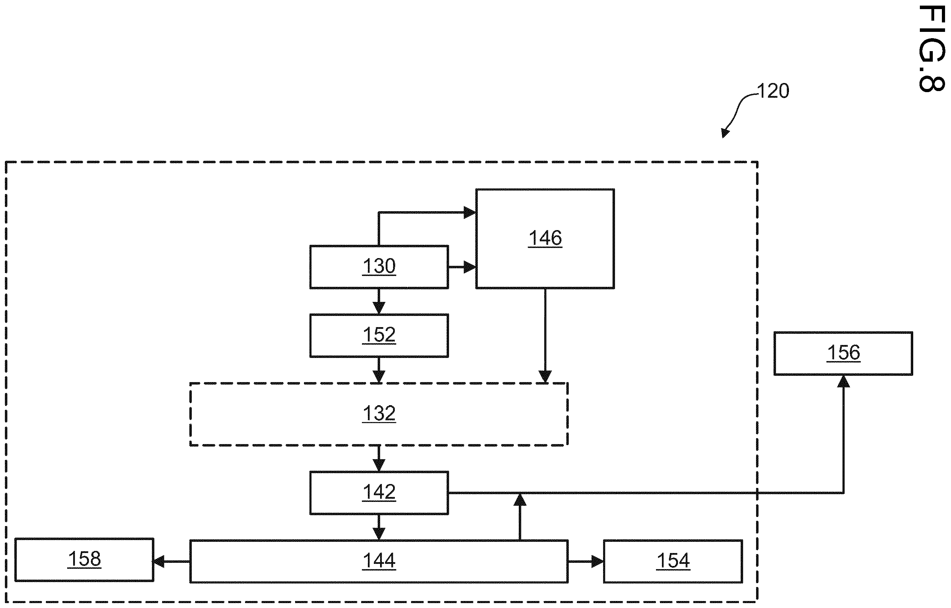

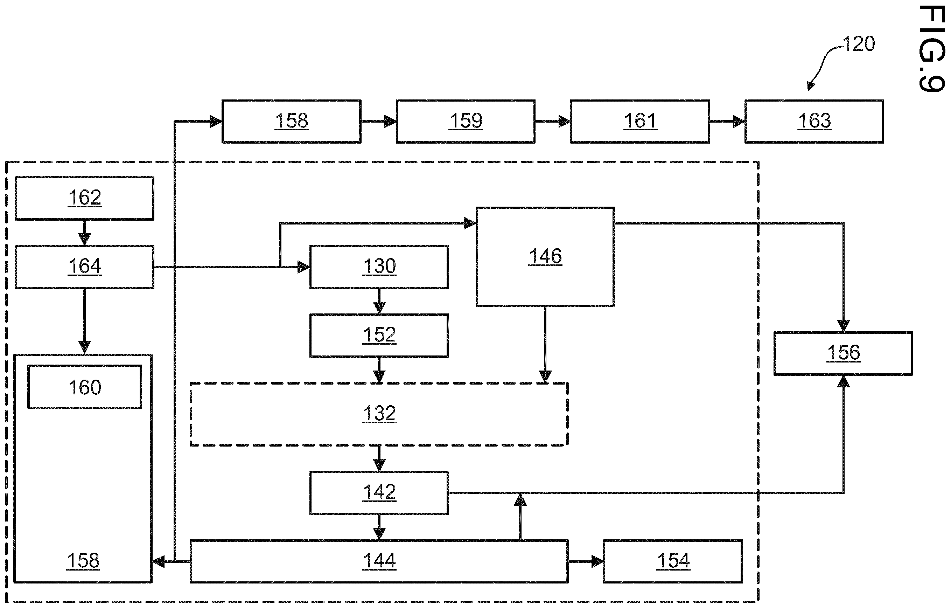

Further, the designing method 120 may comprise step g) (denoted with reference number 156) of retrieving at least one item of analysis information from the at least one interpretation result generated in step c) 142 and using the at least one item of analysis information in an automated learning process, as for example illustrated in Figures 8 and 9. As an example, the automated learning process may further make use of information on the material retrieved in step e) 146, as is illustrated in Figure 9 by an arrow pointing from step e) 146 to step g) 156.

Specifically, the designing method 120 may comprise using the at least one requesting computer 124 and the at least one processing computer 122. In particular, the processing computer 122 may retrieve the three-dimensional geometrical data 110 from the requesting computer 124. Further the processing computer 122 may perform at least step b) 132 and step c) 142 and may further output the interpretation result in step d) 144 to the requesting computer 124. Specifically, as illustrated in Figure 2, the processing computer 122 and the requesting computer 124 may communicate via the at least one web interface 128.

The designing method 120 may further comprise step h) (denoted with reference number 158) of outputting the interpretation result generated in step c) to at least one further computing device, as for example illustrated in Figures 7 to 9. In particular, step h) 158 may further comprise, for example as a further substep as illustrated in Figure 9, identifying matching collaborators or partners 160, such as tool manufacturers, mold designers, mechanical engineers, injection molders and material suppliers. As an example, the designing method 120 may comprise performing step h) 158 twice, as illustrated in Figure 9. In particular, the computing device to which the interpretation result generated in step c) may be output, may be configured for translating the interpretation result into at least one process parameter. Thus, the designing method 120, may comprise as an additional step, as it is illustrated in Figure 9, translating the interpretation result into at least one process parameter 159. Subsequently to performing step 159, the designing method 120 may further comprise a transferring step 161, wherein the process parameters may be transferred to a suitable manufacturing machine. Subsequently to performing step 161, the designing method 120 may further comprise evaluating a manufacturing outcome 163, such as for example the component.

As further steps, the designing method 120 may comprise a registration step 162 and a subsequently performed login step 164. As for example illustrated in Figure 9, the registration step 162 and the login step 164 may be performed before performing step a). Further, matching collaborators or partners may also have to be registered and logged in as may exemplarily be illustrated in Figure 9 by an arrow pointing from the login step 164 to step h) 158.

### List of reference numbers

- 110: geometrical data
- 112: mold cavity
- 114: component
- 116: design system
- 118: processor
- 120: computer-implemented method of designing a molding process
- 122: processing computer
- 124: requesting computer
- 126: memory
- 128: web interface
- 130: step a)
- 132: step b)
- 134: step b1.
- 136: step b2.
- 138: first substep of b2.
- 140: second substep of b2.
- 142: step c)
- 144: step d)
- 146: step e)
- 148: step e1.
- 150: step e2.
- 152: step f)
- 154: outputting at least one automatic report
- 156: step g)
- 158: step h)
- 159: translating the interpretation result into at least one process parameter
- 160: identifying matching collaborators or partners
- 161: transfer step
- 162: registration step
- 163: evaluating a manufacturing outcome
- 164: login step

## Claims

1. A computer-implemented method of designing a molding process for manufacturing at least one component (114), the method comprising
a) retrieving three-dimensional geometrical data (110) describing a candidate shape of a mold cavity (112);
b) analyzing the geometrical data (110), the analyzing comprising:
b1. analyzing a geometry of the mold cavity (112) by automatically scanning the geometrical data (110) for a plurality of predetermined criteria; and
b2. simulating a use of the mold cavity (112) by at least one of:
- a computer-implemented simulation of a filling of the mold cavity (112) with a molten mass of at least one material; and
- a computer-implemented simulation of the component (114) manufactured by using the mold cavity (112);
c) automatically interpreting at least one analysis result generated in step b) by subjecting the analysis result to at least one target specification;
d) outputting at least one interpretation result generated in step c), the interpretation result describing at least one quality of one or both of the molding process and a part design using the candidate shape of the mold cavity(112); and
f) pre-processing the geometrical data (110) retrieved in step a) by discretizing the geometrical data (110) into a mesh comprising a finite number of mesh elements, wherein step f) is performed before performing step b), wherein step f) further comprises a file repair of defective parts of the geometrical data (110).

2. The method according to the preceding claim, wherein the method further comprises:
e) retrieving at least one material to be used for the molding process
wherein step e) is performed before step b).

3. The method according to any one of the two preceding claims, wherein step e) comprises:
e1. retrieving at least one target property of at least one of: the material; the component (114); a manufacturing machine for manufacturing the component (114); and
e2. automatically selecting at least one material from a database according to the target property.

4. The method according to any one of the preceding claims, wherein step b1. comprises determining in the geometrical data (110) at least one measured variable, and wherein step c) comprises comparing the at least one measured variable with at least one threshold value of the target specification.

5. The method according to any one of the preceding claims, wherein step c) comprises identifying critical geometrical properties of the candidate shape of the mold cavity (112), wherein step c) comprises using at least one process of artificial intelligence.

6. The method according to any one of the preceding claims, wherein step b2. comprises determining at least one simulated variable, and wherein step c) comprises comparing the at least one simulated variable with at least one simulation threshold variable of the target specification.

7. The method according to the preceding claim, wherein the at least one simulated variable is a property selected from the group consisting of: a property of the molten mass of the at least one material used for filling the mold, a temperature of the molten mass of the at least one material; a property of the mold; a flow path length; a filling time for completely filling the mold with the molten mass of the at least one material; a property of the at least one material of the component.

8. The method according to any one of the preceding claims, wherein the at least one interpretation result generated in step c) comprises at least one item of recommendation information, wherein the at least one item of recommendation information comprises at least one recommendation selected from the group consisting of: a material adaption, a geometry adaption, and adaption of manufacturing parameters.

9. The method according to the preceding claim, wherein the method further comprises outputting at least one automatic report, wherein the automatic report comprises the at least one item of recommendation information, wherein step d) comprises outputting the at least one automatic report, wherein the outputting of the at least one automatic report comprises providing guidance for one or more of a material adaption, a geometry adaption and an adaption of manufacturing parameters.

10. The method according to any one of the preceding claims, wherein the method further comprises
g) retrieving at least one item of analysis information from the at least one interpretation result generated in step c) and using the at least one item of analysis information in an automated learning process.

11. The method according to any one of the preceding claims, wherein the method comprises using at least one requesting computer (124) and at least one processing computer (122), wherein the processing computer (122) retrieves the three-dimensional geometrical data (110) from the requesting computer (124), performs at least steps b)-c), and outputs the interpretation result in step d) to the requesting computer (124), wherein the requesting computer (124) and the processing computer (122) communicate via at least one web interface (128).

12. The method according to any one of the preceding claims, wherein the method further comprises
h) outputting the interpretation result generated in step c) to at least one further computing device.

13. A design system (116) for designing a molding process for manufacturing at least one component (114), the design system (116) comprising at least one processor (118) configured to perform the steps of the method according to any one of the preceding claims.

14. The design system (116) according to the preceding claim, wherein the design system (116) comprises at least one processing computer (122) and at least one requesting computer (124), wherein the processing computer (122) is configured for retrieving the three-dimensional geometrical data (110) from the requesting computer (124), for performing at least steps b)-c), and for outputting the interpretation result in step d) to the requesting computer (124).

15. The design system (116) according to the preceding claim, wherein the design system (116) further comprises at least one web interface (128) for one or both of transmitting information from the requesting computer (124) to the processing computer (122) or vice versa.

## Patentansprüche

1. Computerimplementiertes Verfahren zum Entwerfen eines Formprozesses zur Herstellung mindestens eines Bauteils (114), wobei das Verfahren Folgendes umfasst:
a) Abrufen von dreidimensionalen Geometriedaten (110), die eine mögliche Form eines Formhohlraums (112) beschreiben;
b) Analysieren der Geometriedaten (110), wobei das Analysieren Folgendes umfasst:
b1. Analysieren einer Geometrie des Formhohlraums (112) durch automatisches Abtasten der Geometriedaten (110) nach einer Vielzahl von vorbestimmten Kriterien; und
b2. Simulieren einer Verwendung des Formhohlraums (112) durch mindestens einen der folgenden Punkte:
- eine computerimplementierte Simulation einer Füllung des Formhohlraums (112) mit einer geschmolzenen Masse aus mindestens einem Material; und
- eine computerimplementierte Simulation des unter Verwendung des Formhohlraums (112) hergestellten Bauteils (114);
c) automatisches Interpretieren mindestens eines in Schritt b) erzeugten Analyseergebnisses, indem das Analyseergebnis mindestens einer Zielspezifikation unterzogen wird;
d) Ausgeben mindestens eines in Schritt c) erzeugten Interpretationsergebnisses, wobei das Interpretationsergebnis mindestens eine Qualität des Formprozesses und/oder eines Teileentwurfs unter Verwendung der Kandidatenform des Formhohlraums (112) beschreibt; und
f) Vorverarbeitung der in Schritt a) abgerufenen Geometriedaten (110) durch Diskretisierung der Geometriedaten (110) in ein Netz, das eine endliche Anzahl von Netzelementen umfasst,
wobei Schritt f) vor der Durchführung von Schritt b) durchgeführt wird, wobei Schritt f) ferner eine Dateireparatur von fehlerhaften Teilen der Geometriedaten (110) umfasst.

2. Verfahren nach dem vorhergehenden Anspruch, wobei das Verfahren ferner Folgendes umfasst:
e) Abrufen mindestens eines Materials, das für den Formprozess verwendet werden soll, wobei Schritt e) vor Schritt b) durchgeführt wird.

3. Verfahren nach einem der beiden vorhergehenden Ansprüche, wobei Schritt e) Folgendes umfasst:
e1. Abrufen mindestens einer Zieleigenschaft von mindestens einem der folgenden Elemente:
das Material; das Bauteil (114); eine Fertigungsmaschine zur Herstellung des Bauteils (114); und
e2. automatische Auswahl mindestens eines Materials aus einer Datenbank entsprechend der Zieleigenschaft.

4. Verfahren nach einem der vorhergehenden Ansprüche, wobei Schritt b1. das Ermitteln mindestens einer Messgröße in den Geometriedaten (110) umfasst, und
wobei Schritt c) den Vergleich der mindestens einen Messgröße mit mindestens einem Schwellenwert der Zielspezifikation umfasst.

5. Verfahren nach einem der vorangegangenen Ansprüche,
wobei Schritt c) die Identifizierung kritischer geometrischer Eigenschaften der Kandidatenform des Formhohlraums (112) umfasst,
wobei Schritt c) die Anwendung mindestens eines Verfahrens der künstlichen Intelligenz umfasst.

6. Verfahren nach einem der vorangegangenen Ansprüche,
wobei Schritt b2. das Bestimmen mindestens einer simulierten Variablen umfasst, und wobei Schritt c) das Vergleichen der mindestens einen simulierten Variablen mit mindestens einer Simulationsschwellenvariablen der Zielspezifikation umfasst.

7. Verfahren nach dem vorhergehenden Anspruch,
wobei die mindestens eine simulierte Variable eine Eigenschaft ist, die aus der Gruppe ausgewählt wird, die Folgendes beinhaltet:
eine Eigenschaft der geschmolzenen Masse des mindestens einen Materials, das zum Füllen der Form verwendet wird, eine Temperatur der geschmolzenen Masse des mindestens einen Materials; eine Eigenschaft der Form; eine Fließweglänge; eine Füllzeit zum vollständigen Füllen der Form mit der geschmolzenen Masse des mindestens einen Materials; eine Eigenschaft des mindestens einen Materials des Bauteils.

8. Verfahren nach einem der vorangegangenen Ansprüche,
wobei das in Schritt c) erzeugte mindestens eine Interpretationsergebnis mindestens eine Empfehlungsinformation umfasst,
wobei die mindestens eine Empfehlungsinformation mindestens eine Empfehlung umfasst, die aus der Gruppe ausgewählt ist, die Folgendes beinhaltet:
eine Materialanpassung, eine Geometrieanpassung und eine Anpassung der Fertigungsparameter.

9. Verfahren nach dem vorhergehenden Anspruch,
wobei das Verfahren ferner die Ausgabe mindestens eines automatischen Berichts umfasst,
wobei der automatische Bericht die mindestens eine Empfehlungsinformation enthält,
wobei Schritt d) die Ausgabe des mindestens einen automatischen Berichts umfasst,
wobei die Ausgabe des mindestens einen automatischen Berichts die Bereitstellung einer Anleitung für eine oder mehrere Materialanpassungen, eine Geometrieanpassung und eine Anpassung der Fertigungsparameter umfasst.

10. Verfahren nach einem der vorangegangenen Ansprüche,
wobei das Verfahren ferner Folgendes umfasst:
g) Abrufen von mindestens einer Analyseinformation aus dem mindestens einen in Schritt c) erzeugten Interpretationsergebnis und Verwenden der mindestens einen Analyseinformation in einem automatischen Lernprozess.

11. Verfahren nach einem der vorangegangenen Ansprüche,
wobei das Verfahren die Verwendung von mindestens einem anfordernden Computer (124) und mindestens einem verarbeitenden Computer (122) umfasst,
wobei der verarbeitende Computer (122) die dreidimensionalen Geometriedaten (110) von dem anfordernden Computer (124) abruft, mindestens die Schritte b) - c) durchführt und das Interpretationsergebnis in Schritt d) an den anfordernden Computer (124) ausgibt,
wobei der anfordernde Computer (124) und der verarbeitende Computer (122) über mindestens eine Web-Schnittstelle (128) kommunizieren.

12. Verfahren nach einem der vorangegangenen Ansprüche,
wobei das Verfahren ferner Folgendes umfasst:
h) Ausgeben des in Schritt c) erzeugten Interpretationsergebnisses an mindestens eine weitere Rechenvorrichtung.

13. Entwurfssystem (116) zum Entwerfen eines Formprozesses zur Herstellung mindestens eines Bauteils (114), wobei das Entwurfssystem (116) mindestens einen Prozessor (118) umfasst, der so konfiguriert ist, dass er die Schritte des Verfahrens nach einem der vorhergehenden Ansprüche durchführt.

14. Entwurfssystem (116) nach dem vorhergehenden Anspruch,
wobei das Entwurfssystem (116) mindestens einen verarbeitenden Computer (122) und mindestens einen anfordernden Computer (124) umfasst,
wobei der verarbeitende Computer (122) so konfiguriert ist, dass er die dreidimensionalen Geometriedaten (110) von dem anfordernden Computer (124) abruft, um zumindest die Schritte b) bis c) durchzuführen und das Interpretationsergebnis in Schritt d) an den anfordernden Computer (124) auszugeben.

15. Entwurfssystem (116) nach dem vorhergehenden Anspruch,
wobei das Entwurfssystem (116) ferner mindestens eine Web-Schnittstelle (128) für die Übertragung von Informationen von dem anfordernden Computer (124) zu dem verarbeitenden Computer (122) oder umgekehrt umfasst.

## Revendications

1. Procédé mis en œuvre par ordinateur, de conception d'un processus de moulage pour fabriquer au moins un composant (114), le procédé comprenant
a) la récupération de données géométriques tridimensionnelles (110) décrivant une forme candidate d'une cavité de moule (112) ;
b) l'analyse des données géométriques (110), l'analyse comprenant :
b1. l'analyse d'une géométrie de la cavité de moule (112) en balayant automatiquement les données géométriques (110) pour une pluralité de critères prédéterminés ; et
b2. la simulation d'une utilisation de la cavité de moule (112) par au moins une parmi :
- une simulation mise en œuvre par ordinateur, d'un remplissage de la cavité de moule (112) avec une masse fondue d'au moins un matériau ; et
- une simulation mise en œuvre par ordinateur, du composant (114) fabriqué en utilisant la cavité de moule (112) ;
c) l'interprétation automatiquement d'au moins un résultat d'analyse généré à l'étape b) en soumettant le résultat d'analyse à au moins une spécification cible ;
d) la production d'au moins un résultat d'interprétation généré à l'étape c), le résultat d'interprétation décrivant au moins une qualité d'un ou des deux processus de moulage et une conception de pièce utilisant la forme candidate de la cavité de moule (112) ; et
f) le pré-traitement des données géométriques (110) récupérées à l'étape a) en discrétisant les données géométriques (110) en un maillage comprenant un nombre fini d'éléments de maillage, l'étape f) étant effectuée avant d'effectuer l'étape b), l'étape f) en outre comprenant un fichier de réparation des parties défectueuses des données géométriques (110).

2. Procédé selon la revendication précédente, dans lequel le procédé comprend en outre :
e) la récupération d'au moins un matériau à utiliser pour le procédé de moulage, l'étape e) étant mise en œuvre avant l'étape b).

3. Procédé selon l'une quelconque des deux revendications précédentes, dans lequel l'étape e) comprend :
e1. la récupération d'au moins une propriété cible d'au moins l'un parmi : le matériau ; le composant (114) ; une machine de fabrication pour fabriquer le composant (114) ; et
e2. la sélection automatique d'au moins un matériau dans une base de données selon la propriété cible.

4. Procédé selon l'une quelconque des revendications précédentes, dans lequel l'étape b1. comprend la détermination dans les données géométriques (110) d'au moins une variable mesurée, et dans lequel l'étape c) comprend la comparaison de ladite au moins une variable mesurée avec au moins une valeur seuil de la spécification cible.

5. Procédé selon l'une quelconque des revendications précédentes, dans lequel l'étape c) comprend l'identification de propriétés géométriques critiques de la forme candidate de la cavité de moule (112), l'étape c) comprenant l'utilisation d'au moins un processus d'intelligence artificielle.

6. Procédé selon l'une quelconque des revendications précédentes, dans lequel l'étape b2. comprend la détermination d'au moins une variable simulée, et dans lequel l'étape c) comprend la comparaison de ladite au moins une variable simulée avec au moins une variable seuil de simulation de la spécification cible.

7. Procédé selon la revendication précédente, dans lequel ladite au moins une variable simulée est une propriété choisie dans le groupe constitué par : une propriété de la masse fondue dudit au moins un matériau utilisé pour le remplissage du moule, une température de la masse fondue dudit au moins un matériau ; une propriété du moule ; une longueur de trajet d'écoulement ; un temps de remplissage pour remplir complètement le moule avec la masse fondue dudit au moins un matériau ; une propriété dudit au moins un matériau du composant.

8. Procédé selon l'une quelconque des revendications précédentes, dans lequel ledit au moins un résultat d'interprétation généré à l'étape c) comprend au moins une information de recommandation, ladite au moins une information de recommandation comprenant au moins une recommandation choisie dans le groupe consistant en : une adaptation matière, une adaptation géométrie, et une adaptation des paramètres de fabrication.

9. Procédé selon la revendication précédente, dans lequel le procédé comprend en outre la production d'au moins un rapport automatique, le rapport automatique comprenant ladite au moins une information de recommandation, l'étape d) comprenant la production dudit au moins un rapport automatique, la production dudit au moins un rapport automatique comprenant la fourniture de conseils pour une ou plusieurs parmi une adaptation de matériau, une adaptation de géométrie et une adaptation de paramètres de fabrication.

10. Procédé selon l'une quelconque des revendications précédentes, dans lequel le procédé comprend en outre
g) la récupération d'au moins une information d'analyse à partir dudit au moins un résultat d'interprétation généré à l'étape c) et l'utilisation de ladite au moins une information d'analyse dans un processus d'apprentissage automatisé.

11. Procédé selon l'une quelconque des revendications précédentes, dans lequel le procédé comprend l'utilisation d'au moins un calculateur demandeur (124) et d'au moins un calculateur de traitement (122), le calculateur de traitement (122) récupérant les données géométriques tridimensionnelles (110) auprès de l'ordinateur demandeur (124), exécutant au moins les étapes b) à c) et délivrant le résultat de l'interprétation à l'étape d) à l'ordinateur demandeur (124), l'ordinateur demandeur (124) et l'ordinateur de traitement (122) communiquant via au moins une interface web (128).

12. Procédé selon l'une quelconque des revendications précédentes, le procédé comprenant en outre
h) la délivrance du résultat d'interprétation généré à l'étape c) à au moins un autre dispositif informatique.

13. Système de conception (116) pour concevoir un procédé de moulage pour la fabrication d'au moins un composant (114), le système de conception (116) comprenant au moins un processeur (118) configuré pour mettre en œuvre les étapes du procédé selon l'une quelconque des revendications précédentes.

14. Système de conception (116) selon la revendication précédente, le système de conception (116) comprenant au moins un ordinateur de traitement (122) et au moins un ordinateur demandeur (124), l'ordinateur de traitement (122) étant configuré pour récupérer les données géométriques tridimensionnelles (110) auprès de l'ordinateur demandeur (124), pour exécuter au moins les étapes b)-c), et pour fournir le résultat d'interprétation à l'étape d) à l'ordinateur demandeur (124) .

15. Système de conception (116) selon la revendication précédente, dans lequel le système de conception (116) comprend en outre au moins une interface Web (128) pour l'un ou les deux parmi la transmission des informations depuis l'ordinateur demandeur (124) vers l'ordinateur de traitement (122) ou vice versa.
